Europäisches Patentamt

European Patent Office

Office européen des brevets

(19)

(11) **EP 0 826 953 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(51) Int Cl.⁶: **G01L 9/12**, G01L 19/00

(21) Anmeldenummer: **97112275.9**

(22) Anmeldetag: **17.07.1997**

(54) **Auswerteeinheit eines kapazitiven Drucksensors**

Processing module for a capacitive pressure sensor

Module de traitement pour un capteur de pression capacitif

(84) Benannte Vertragsstaaten:
**DE FR GB IT**

(30) Priorität: **21.08.1996 DE 19633630**

(43) Veröffentlichungstag der Anmeldung:
**04.03.1998 Patentblatt 1998/10**

(73) Patentinhaber: **Endress + Hauser GmbH + Co.
79689 Maulburg (DE)**

(72) Erfinder:
• **Gerst, Peter
79576 Weil am Rhein (DE)**
• **Banholzer, Karlheinz
79688 Hausen (DE)**
• **Flögel, Karl
79650 Schopfheim (DE)**

• **Jung, Peter
79585 Steinen (DE)**

(74) Vertreter: **Morstadt, Volker, Dipl.-Ing.
Endress + Hauser
Zentrale Patentabteilung
Postfach 2222
79574 Weil am Rhein (DE)**

(56) Entgegenhaltungen:
**DE-A- 3 504 329        DE-A- 3 832 568
DE-A- 3 933 512        DE-A- 4 110 447
DE-C- 3 932 443**

• **KIRBERICH L: "A SMART TRANSMITTER FOR DIFFERENTIAL PRESSURE MEASUREMENT"
JOURNAL A, Bd. 32, Nr. 3, 1.Oktober 1991, Seiten 35-37, XP000266211**

**Beschreibung**

Die Erfindung betrifft eine Auswerteeinheit eines

- ein Sensorelement mit

  -- einer flüssigkeitsgefüllten Meßkammer,
  -- einer ersten Membran, an der ein erster auf das Sensorelement einwirkender Druck anliegt, der der Summe aus einem statischen Druck und einem ersten Druck entspricht,
  -- einer zweiten Membran, an der ein zweiter auf das Sensorelement einwirkender Druck anliegt, der der Summe aus dem statischen Druck und einem zweiten Druck entspricht, und
  -- zwei Meßkondensatoren, deren Kapazitäten sich gegensinnig mit der Differenz des ersten und des zweiten Drucks und gleichsinnig mit dem statischen Druck ändern,

- einen am Sensorelement angeordneten Temperatursensor und
- eine mit dem Temperatursensor verbundene Temperaturmeßschaltung, die ein der Sensortemperatur entsprechendes Ausgangssignal liefert,

aufweisenden Differenzdrucksensors, welche umfaßt:

- eine Meßschaltung zur Bestimmung der jeweiligen Kehrwerte der Kapazitäten der Meßkondensatoren und
- eine Recheneinheit,

  -- die die Summe der Kehrwerte der beiden Kapazitäten bestimmt,
  -- die die Differenz der Kehrwerte der beiden Kapazitäten bestimmt und dieser einen Differenzdruck-Meßwert zuordnet und
  -- die ein Ausgangssignal abgibt, das einem Differenzdruck, nämlich der Differenz zwischen dem ersten und dem zweiten Druck entspricht.

In der DE-C 39 32 443 ist eine Auswerteeinheit eines

- ein Sensorelement mit

  -- einer flüssigkeitsgefüllten Meßkammer,
  -- einer ersten Membran, an der ein erster auf das Sensorelement einwirkender Druck anliegt, der der Summe aus einem statischen Druck und einem ersten Druck entspricht,
  -- einer zweiten Membran, an der ein zweiter auf das Sensorelement einwirkender Druck anliegt, der der Summe aus dem statischen Druck und einem zweiten Druck entspricht, und
  -- zwei Meßkondensatoren, deren Kapazitäten sich gegensinnig mit der Differenz des ersten und des zweiten Drucks und gleichsinnig mit dem statischen Druck ändern,

- einen am Sensorelement angeordneten Temperatursensor und
- eine mit dem Temperatursensor verbundene Temperaturmeßschaltung, die ein der Sensortemperatur entsprechendes Ausgangssignal liefert,

aufweisenden Differenzdrucksensors beschrieben, welche umfaßt:

- eine Meßschaltung zur Bestimmung der jeweiligen Kehrwerte der Kapazitäten der Meßkondensatoren und
- eine Recheneinheit,

  -- die die Summe der Kehrwerte der beiden Kapazitäten bestimmt,
  -- die die Differenz der Kehrwerte der beiden Kapazitäten bestimmt und dieser einen Differenzdruck-Meßwert zuordnet und
  -- die ein Ausgangssignal abgibt, das einem Differenzdruck, nämlich der Differenz zwischen dem ersten und dem zweiten Druck entspricht.

Bei Differenzdrucksensoren mit flüssigkeitsgefüllten Meßkammern bewirkt eine Temperaturerhöhung, daß sich die Füllflüssigkeit ausdehnt. Beide Membranen werden nach außen ausgelenkt. Folglich erniedrigen sich die Werte beider Kapazitäten. Die Summe der Kehrwerte der beiden Kapazitäten ist somit ein Maß für die Temperatur und wird bei dem Gegenstand der DE 39 32 443 dazu verwendet, den Differenzdruck-Meßwert bzgl. temperaturbedingter Meßfehler zu korrigieren.

Zusätzlich wird die Sensortemperatur mittels des Temperatursensors und der Temperaturmeßschaltung bestimmt. Übersteigt die Abweichung zwischen der Sensortemperatur und einer aufgrund der Summe der Kapazitäten zu erwartenden Temperatur einen festgelegten Grenzwert wird eine Fehlermeldung ausgelöst.

Neben dem genannten temperatur-bedingten Meßfehler tritt ein weiterer im folgenden als Nenndruckfehler bezeichneter Meßfehler auf. Dieser entsteht dadurch, daß das Sensorelement durch den statischen Druck in axialer Richtung, d.h. in Richtung der Flächennormalen der Membranen, zusammengedrückt und entsprechend in radialer Richtung gedehnt wird. Dies führt zu einer radialen Dehnung und damit einer Erhöhung der Steifigkeit der Membranen. Die Auslenkung der Membranen steigt im wesentlichen linear mit dem an dem Sensorelement anliegenden Differenzdruck.

Diese differenzdruck-abhängige Auslenkung nimmt im wesentlichen linear mit steigendem statischem Druck ab. Der statische Druck bewirkt immer eine Zunahme der Werte beider Kapazitäten.

Bei einem auf das Sensorelement einwirkenden Differenzdruck von 0 Pa, ist der Nenndruckfehler proportional zum statischen Druck und entsteht durch Unsymmetrien des Aufbaus des Sensorelements. Dieser Nenndruckfehler kann daher sowohl positive als auch negative Werte annehmen. Dagegen ist der Nenndruckfehler bei einem von Null verschiedenen Differenzdruck immer negativ, d. h. es wird ein zu geringer Differenzdruck gemessen.

Beide Fehlerursachen, statischer Druck und Temperatur, wirken sich auf die gleichen Meßgrößen, nämlich die Werte der beiden Kapazitäten aus, müssen jedoch bei einer Korrektur des Differenzdruck-Meßwertes unterschiedlich behandelt werden.

Zur Kompensation des Nenndruckfehlers ist es daher üblich, einen zusätzlichen Sensor einzusetzen, mittels dessen der statische Druck bestimmt wird. Dieser Sensor ist an einer Stelle anzubringen, an der er tatsächlich nur dem statischen Druck ausgesetzt ist und dessen Meßergebnis ist einer Auswerteeinheit des Differenzdrucksensors zur Verfügung zu stellen.

Es ist eine Aufgabe der Erfindung, eine Auswerteeinheit eines Differenzdrucksensors anzugeben, die ein Ausgangssignal erzeugt, das einem hinsichtlich eines Nenndruckfehlers korrigierten Differenzdruck entspricht.

Hierzu besteht die Erfindung in einer Auswerteeinheit die dadurch gekennzeichnet ist, daß

- der Summe der Kehrwerte der Kapazitäten eine interne Temperatur $T_i$ zugeordnet wird,

  -- wobei die interne Temperatur $T_i$ bis auf einen Temperaturversatz dann gleich der Sensortemperatur $T_s$ ist, wenn
  -- an den beiden Membranen kein statischer Druck anliegt und

    --- die Differenz zwischen dem ersten und dem zweiten Druck gleich Null ist,

- ein erster Korrekturwert gemäß

$$\Delta K = T_i - T_s - T_0$$

bestimmt wird, der bei einer Referenztemperatur ein Maß für den statischen Druck ist,

  -- wobei $T_0$ der bei der Referenztemperatur bestimmte Temperaturversatz zwischen der Sensortemperatur $T_s$ und der internen Temperatur $T_i$ ist, und

- aus dem Differenzdruck-Meßwert unter Verwendung des ersten Korrekturwerts ein bezüglich eines durch den statischen Druck bedingten Meßfehlers korrigierter Differenzdruck bestimmt wird.

Gemäß einer Weiterbildung der Erfindung wird ein zweiter Korrekturwert bestimmt, der gleich dem Produkt aus dem ersten Korrekturwert und einem Polynom der Sensortemperatur ist, wobei das Polynom konstante Koeffizienten aufweist, die in einem Speicher abgelegt sind, die derart bestimmt sind, daß bei einer Sensortemperatur und einem bestimmten statischen Druck der zweite Korrekturwert jeweils den Wert annimmt, den der erste Korrekturwert bei der Referenztemperatur annehmen würde, wenn der gleiche statische Druck auf den Differenzdrucksensor einwirkt.

Gemäß einer Ausgestaltung ist der Differenzdruck-Meßwert hinsichtlich eines temperatur-bedingten Meßfehlers korrigiert.

Gemäß einer weiteren Ausgestaltung wird aus dem Differenzdruck-Meßwert ein bezüglich einer durch den anliegenden statischen Druck bedingten Verschiebung des Nullpunkts korrigierter Differenzdruck gemäß

$$\Delta P_K = \Delta P_M - \alpha \; \Delta Y$$

bestimmt, wobei $\Delta Y$ ein Korrekturwert ist, der gleich dem ersten Korrekturwert ist, wenn der Differenzdrucksensor ausschließlich bei Temperaturen eingesetzt wird, die gleich der Referenztemperatur sind oder nur unwesentlich von dieser abweichen und der gleich dem zweiten Korrekturwert ist, wenn der Differenzdrucksensor nicht ausschließlich bei Temperaturen eingesetzt wird, die gleich der Referenztemperatur sind oder nur unwesentlich von dieser abweichen, und wobei $\alpha$ ein in einem Speicher abgelegter konstanter Nullpunktkorrekturfaktor ist.

Gemäß einer weiteren Ausgestaltung ist der Nullpunktkorrekturfaktor gleich dem Quotienten aus einem Nullpunktversatz und einem Referenz-Korrekturwert, wobei

- der Referenz-Korrekturwert der bei einem maximal zulässigen statischen Druck, bei einem Differenzdruck von 0 Pa und bei einer Referenztemperatur aufgenommene erste Korrekturwert und
- der Nullpunktversatz die Differenz zwischen einem bei der Referenztemperatur und bei maximalem statischen Druck gemessenen Differenzdruck und einem ebenfalls bei der Referenztemperatur, jedoch bei einem statischen Druck gleich Null gemessenen Differenzdruck ist,

-- wobei für die Bestimmung beider Differenzdrücke ein Differenzdruck von 0 Pa an dem Differenzdrucksensor anliegt.

Gemäß einer weiteren Ausgestaltung ist aus dem korrigierten Differenzdruck-Meßwert der Differenzdruck derart bestimmt, daß er bezüglich einer durch den anliegenden statischen Druck bedingten Veränderung der Spanne korrigiert ist gemäß

$$\Delta P = (1 + \beta \; \Delta Y) \; \Delta P_K$$

wobei $\beta$ ein konstanter in einem Speicher abgelegter Spanne-Korrekturfaktor ist.

Gemäß einer weiteren Ausgestaltung ist der Spanne-Korrekturfaktor eine gemäß der Gleichung

$$\beta = (\; S/I \; -1) \; 1/\Delta K_R$$

bestimmte Kenngröße des Differenzdrucksensors, wobei

- S eine Sollspanne ist, also die Meßbereichsspanne, die der Differenzdrucksensor aufweisen soll, und
- I eine Istspanne ist, also die Spanne die der Differenzdrucksensor bei der Referenztemperatur und bei dem maximal zulässigen statischen Druck tatsächlich aufweist.

Damit ist eine Auswerteeinheit angegeben, die die Kompensation des Nenndruckfehlers ermöglicht, ohne daß der Wert des statischen Drucks durch einen zusätzlichen Sensor bereitzustellen ist.

Die Erfindung und Vorteile derselben werden anhand der Figur der Zeichnung, in der ein Ausführungsbeispiel dargestellt ist, näher erläutert.

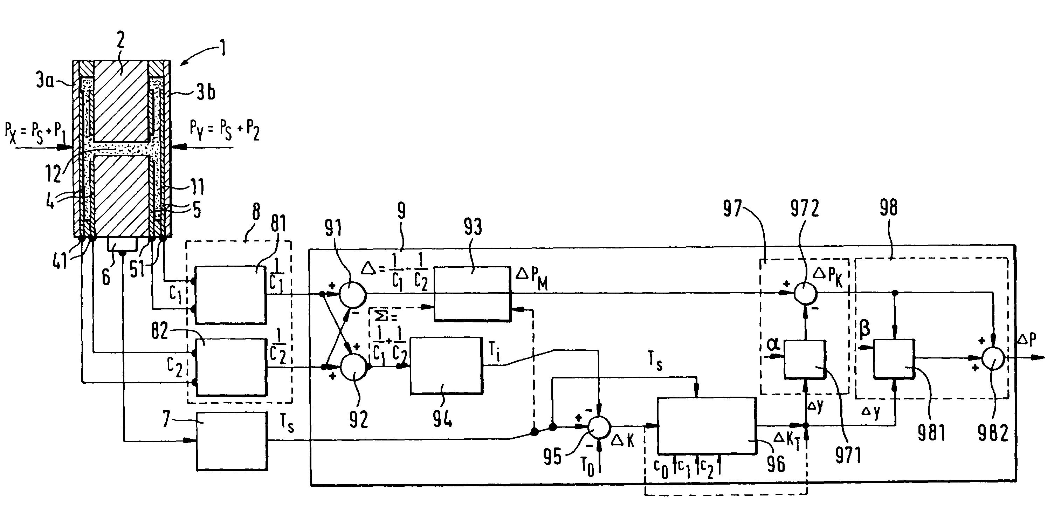

Fig. 1    zeigt eine schematische Darstellung einer Auswerteeinheit eines Differenzdrucksensors.

Figur 1 zeigt einen Differenzdrucksensor mit einem sensorelement 1, das z.B. in einem hier nicht dargestellten Gehäuse angeordnet ist. Das Sensorelement 1 ist beispielsweise eine kapazitive, zylindrische Differenzdruck-Meßzelle mit einer flüssigkeitsgefüllten Meßkammer 11. Sie besteht aus einem zylindrischen Grundkörper 2, an dessen einer Stirnseite eine erste Membran 3a und an dessen zweiter Stirnseite eine zweite Membran 3b jeweils unter Bildung eines Hohlraums angebracht ist. Die Meßkammer 11 weist eine Kapillarleitung 12 auf, die die beiden Hohlräume miteinander verbindet. Die Membranen 3a, 3b und der Grundkörper 2 bestehen z.B. aus Keramik und sind durch ein Verbindungsmaterial, z.B. ein Aktivhartlot, in einem definierten Abstand voneinander gehalten und miteinander hermetisch dicht verbunden. Die Innenflächen der Membranen 3a, 3b und des Grundkörpers 2 sind mit Elektrodenmaterial beschichtet und bilden zwei Meßkondensatoren 4, 5, deren Kapazitäten $C_1$, $C_2$ von der Durchbiegung der jeweiligen Membran 3a, 3b abhängen. Die Elektroden der Meßkondensatoren 4, 5 weisen jeweils Anschlußstellen 41, 51 auf, zwischen denen die jeweilige Kapazität $C_1$, $C_2$ meßbar ist. Solche Differenzdruck-Meßzellen werden auch als kapazitive Einkammer-Differenzdruck-Meßzellen bezeichnet.

An der ersten Membran 3a liegt ein Druck $P_x$ an, der der Summe aus einem statischen Druck $P_S$ und einem ersten Druck $P_1$ entspricht. An der zweiten Membran 3b liegt ein Druck $P_y$ an, der der Summe aus dem statischen Druck $P_S$ und einem zweiten Druck $P_2$ entspricht.

Ist beispielsweise der erste Druck $P_1$ größer als der zweite Druck $P_2$, so wird die erste Membran 3a in Richtung des Grundkörpers 2 ausgelenkt, der Abstand zwischen den entsprechenden Elektroden verringert sich und die Kapazität $C_1$ des ersten Meßkondensators 4 steigt. Entsprechend wird die zweite Membran 3b nach außen ausgelenkt, der Abstand zwischen den entsprechenden Elektroden vergrößert sich und die Kapazität $C_2$ des zweiten Meßkondensators 5 sinkt. Die Kapazitäten $C_1$, $C_2$ der beiden Meßkondensatoren 4, 5 ändern sich folglich gegensinnig mit der Differenz des ersten und des zweiten Drucks.

Ein an beiden Membranen 3a, 3b anliegender statischer Druck $P_S$ bewirkt eine Auslenkung beider Membranen 3a, 3b nach innen. Beide Kapazitäten $C_1$, $C_2$ nehmen folglich gleichsinnig mit dem statischen Druck $P_S$ zu.

Aufgrund der thermischen Ausdehnung der Füllflüssigkeit bewirkt eine Erhöhung der Temperatur, der der Sensor ausgesetzt ist, eine Auslenkung beider Membranen 3a, 3b nach außen. Die Kapazitäten $C_1$, $C_2$ beider Meßkondensatoren 4, 5 nehmen ab.

An dem Sensor ist ein Temperatursensor 6 angeordnet. Dies ist beispielsweise eine Diode oder ein temperaturabhängiger Widerstand. Der Temperatursensor 6 ist mit einer Temperaturmeßschaltung 7 verbunden, die ein einer Sensortemperatur $T_S$ entsprechendes Ausgangssignal liefert.

Die in Fig. 1 dargestellte Auswerteeinheit umfaßt eine Meßschaltung 8 und eine Recheneinheit 9.

Die Meßschaltung 8 dient zur Bestimmung der jeweiligen Kehrwerte der Kapazitäten $C_1$, $C_2$ der Meßkondensatoren 4,5. Sie weist zwei Kapazitätsmeßschaltungen 81, 82 auf die mit den jeweiligen Anschlußstellen 41, 51 verbunden sind und die Ausgangssignale abgeben, die den Kehrwerten $1/C_1$, $1/C_2$ der Kapazitäten $C_1$, $C_2$ entsprechen.

Die Ausgangssignale der Meßschaltung 8 und der Temperaturmeßschaltung 7 liegen an der Recheneinheit 9 zu deren weiterer Verarbeitung an. Die Recheneinheit 9 liefert ein Ausgangssignal, das einem hinsichtlich des Nenndruckfehlers korrigierten Differenzdruck $\Delta P$ entspricht.

In der Recheneinheit 9 wird die Summe $\Sigma$ und die Differenz $\Delta$ der Kehrwerte der beiden Kapazitäten bestimmt. Die Summe $\Sigma$ der Kehrwerte der Kapazitäten hängt von der Temperatur und dem statischen Druck $P_S$ ab, die Differenz $\Delta$ der Kehrwerte der Kapazitäten hängt von der Temperatur, dem statischen Druck $P_S$ und der Differenz des ersten und des zweiten Druckes $P_1$-$P_2$ ab.

Es ist eine Substrahierschaltung 91 vorgesehen, an deren Eingängen die Ausgangssignale der beiden Kapazitätsmeßschaltungen 81, 82 anliegen. Die Substrahierschaltung 91 liefert ein Ausgangssignal, das der Differenz der beiden Eingangssignale entspricht.

Weiterhin ist eine Addierschaltung 92 vorgesehen, an deren Eingängen ebenfalls die Ausgangssignale der beiden Kapazitätsmeßschaltungen 81, 82 anliegen. Sie liefert ein Ausgangssignal, das der Summe der beiden Eingagnssignale entspricht.

Das Ausgangssignal der Subtrahierschaltung 91 liegt an einem Differenzdruck-Rechner 93 an, der der Differenz $\Delta$ der Kehrwerte der beiden Kapazitäten $\Delta = 1/C_1 - 1/C_2$ einen Differenzdruck-Meßwert $\Delta P_M$ zuordnet.

Wird der Differenzdrucksensor nur bei einer festen Temperatur, einer Referenztemperatur $T_R$ oder in einem dieser Referenztemperatur $T_R$ eng benachbarten Temperaturbereich eingesetzt, so kann die Zuordnung der Differenz der Kehrwerte der beiden Kapazitäten $\Delta = 1/C_1 - 1/C_2$ zu dem Differenzdruck-Meßwert $\Delta P_M$ z.B. gemäß einer in einem Speicher abgelegten Kennlinie erfolgen.

Üblicherweise werden Differenzdrucksensoren jedoch in einem weiten Temperaturbereich, z.B. -20°C bis 80°C, eingesetzt. Es muß in diesem Fall in dem Differenzdruckrechner 93 eine Kompensation eines temperatur-bedingten Meßfehlers erfolgen. Hier kann beispielsweise ein Verfahren eingesetzt werden, wie es in der DE-C 35 04 329 beschrieben ist, bei dem die Differenz der Kehrwerte der beiden Kapazitäten $\Delta = 1/C_1 - 1/C_2$ gleich einem ersten Polynom der Temperatur T und des Differenzdruck-Meßwerts $\Delta P_M$, z.B.

$$\Delta = 1/C_1 - 1/C_2$$

$$= a + b\,T + c\,T^2 + d\,\Delta P_M + e\,\Delta P_M{}^3 + f\,\Delta P_M\,T + g\,\Delta P_M\,T^2$$

und die Summe der Kehrwerte der beiden Kapazitäten $\Sigma = 1/C_1 + 1/C_2$ gleich einem zweiten Polynom der Temperatur T und des Differenzdruck-Meßwerts $\Delta P_M$, z.B.

$$\Sigma = 1/C_1 + 1/C_2$$

$$= h + i\,T + j\,T^2 + k\,\Delta P_M + l\,\Delta P_M{}^2$$

gesetzt wird. Die Koeffizienten a bis l sind in einem Kalibrationsverfahren zu bestimmen. Durch Lösung des durch die beiden Gleichungen aufgestellten Gleichungssystems erhält man einen hinsichtlich des temperatur-bedingten Meßfehlers korrigierten Differenzdruck-Meßwert $\Delta P_M$

Da durch das Ausgangssignal der Temperaturmeßschaltung 7 ohnehin die aktuelle Sensortemperatur $T_S$ zur Verfügung steht ist es ebenso möglich, lediglich die erste Gleichung unter Einsetzung der aktuellen Sensortemperatur $T_S$ für die Temperatur T zu lösen, um den Differenzdruck-Meßwert $\Delta P_M$ zu ermitteln.

Da beliebige Temperaturfehler-Korrekturen einsetzbar sind, sind die Verbindungslinien zwischen der Temperaturmeßschaltung 7 und dem Differenzdruckrechner 93 und zwischen dem Addierer 92 und dem Differenzdruckrechner 93 lediglich gestrichelt eingezeichnet, gehen sie doch jeweils auf eine spezielle Temperatur-Korrektur zurück.

Bei der Korrektur des temperatur-bedingten Meßfehlers wird der statische Druck $P_S$ nicht berücksichtigt. Für die Kalibration wird ein statischer Druck $P_S$ von 0 Pa angesetzt.

Das Ausgangssignal der Addierschaltung 92, das der Summe $\Sigma$ der Kehrwerte der beiden Kapazitäten $\Sigma = 1/C_1 + 1/C_2$ entspricht, liegt an einem Temperatur-Rechner 94 an. Dieser ordnet der Summe $\Sigma$ gemäß einer in einem Speicher abgelegten Kennlinie einen im folgenden als interne Temperatur $T_i$ bezeichneten Wert zu.

Die interne Temperatur $T_i$ ist bis auf einen nachfolgend beschriebenen Temperaturversatz $T_0$ dann gleich der Sensortemperatur $T_S$ die die Temperaturmeßschaltung 7 ermittelt, wenn an den beiden Membranen 3a, 3b kein statischer Druck $P_S$ anliegt, die Differenz zwischen dem ersten und dem zweiten Druck 0 Pa beträgt und die Summe $\Sigma$ der Kehrwerte der beiden Kapazitäten $1/C_1 + 1/C_2$ den Wert $\Sigma$ aufweist.

Aus der internen Temperatur $T_i$ und der Sensortemperatur $T_S$ wird ein erster Korrekturwert $\Delta K$ bestimmt. Dies erfolgt in einer in der Recheneinheit 9 angeordneten Substrahierschaltung 95 die ein gemäß der Gleichung

$$\Delta K = T_i - T_s - T_0$$

bestimmtes Ausgangssignal liefert. Es wird also von dem internen Temperaturwert $T_i$ der Wert der Sensortemperatur $T_s$ und der Temperaturversatz $T_0$ abgezogen.

Der Temperaturversatz $T_0$ entspricht der bei einem Differenzdruck von 0 Pa, bei einem statischen Druck $P_S$ von 0 Pa und bei einer Referenztemperatur $T_R$, z.B. 25 °C, bestimmten Differenz zwischen der Sensortemperatur $T_S$ und der internen Temperatur $T_i$ und ist in einem nicht dargestellten Speicher abgelegt. Mit einem statischer Druck von 0 Pa ist in dem gesamten Text gemeint, daß das Sensorelement 1 lediglich dem atmosphärischen Druck, nicht jedoch einem zusätzlichen statischem Druck ausgesetzt ist. Dieser Temperaturversatz $T_0$ variiert von Sensorelement zu Sensorelement. Im Idealfall ist er gleich Null.

Der erste Korrekturwert $\Delta K$ ist bei der Referenztemperatur $T_R$ ein Maß für den auf die beiden Membranen 3a, 3b einwirkenden statischen Druck $P_S$. Im Grenzfall eines verschwindenden statischen Drucks $P_S$ stimmen die interne Temperatur $T_i$ und die Sensortemperatur $T_S$ bis auf den Temperaturversatz $T_0$ überein.

Weicht die Temperatur von dieser Referenztemperatur $T_R$ ab, d.h. unterscheidet sich die Sensortemperatur $T_S$ von der Referenztemperatur $T_R$, so hängt der erste Korrekturwert $\Delta K$ nicht allein vom statischen Druck $P_S$ sondern auch von der Temperatur ab.

Zur Korrektur des durch den statischen Druck $P_S$ bedingten Meßfehlers ist es jedoch erforderlich, daß ein Maß für den statischen Druck $P_S$ zur Verfügung steht. Für den Einsatz des Differenzdrucksensors bei Temperaturen, die deutlich von der Referenztemperatur $T_R$ abweichen wird daher in einer weiteren Rechenschaltung 96 ein zweiter Korrekturwert $\Delta K_T$ erzeugt, der dem Produkt aus dem ersten Korrekturwert $\Delta K$ und einem Polynom, das eine Funktion der Sensortemperatur $T_S$ ist, entspricht. Dieser zweite Korrekturwert $\Delta K_T$ wird beispielsweise gemäß der Gleichung

$$\Delta K_T = (T_i - T_S - T_0)(c_0 + c_1\,T_S + c_2\,T_S{}^2)$$

$$= \Delta K\,(c_0 + c_1\,T_S + c_2\,T_S{}^2)$$

bestimmt. $c_0$, $c_1$ und $c_2$ sind konstante in einem Kalibrierverfahren bestimmte und in einem Speicher abgelegte Koeffizienten des Polynoms.

Selbstverständlich kann zur Erzielung einer höheren Genauigkeit ein Polynom höherer Ordnung, bzw. unter Genauigkeitseinbußen ein Polynom niedriger Ordnung eingesetzt werden.

Die Koeffizienten des Polynoms sind so zu wählen, daß der zweite Korrekturwert $\Delta K_T$ bei jedem zulässigen Wert der Sensortemperatur $T_S$ innerhalb der durch den Grad des Polynoms vorgegebenen Genauigkeitsgrenzen dem an dem Differenzdrucksensor anliegenden statischen Druck $P_S$ entspricht.

Sie werden in einem Kalibrierverfahren bestimmt, indem bei einem gegebenen von Null verschiedenen statischen Druck $P_S$, vorzugsweise dem maximal zulässigen statischen Druck $P_{Smax}$, der erste Korrekturwert $\Delta K$ bei einer von dem Grad des Polynoms abhängigen Anzahl von verschiedenen Temperaturen und bei der Referenztemperatur $T_R$ bestimmt wird. Der bei der Referenztemperatur $T_R$ ermittelte erste Korrekturwert ist ein Maß für den statischen Druck $P_S$ und wird als Sollwert angesetzt. Aus den Meßdaten werde die Koeffizienten, z.B. mittels der Gauß'schen Fehlerquadrat-Methode derart bestimmt, daß die Abweichung zwischen dem jeweiligen zweiten Korrekturwert $\Delta K_T$ und dem Sollwert minimal ist.

Mit dem zweiten Korrekturwert $\Delta K_T$ liegt nun auch bei Temperaturen, die stark von der Referenztemperatur $T_R$ abweichen ein Maß für den statischen Druck $P_S$ vor.

Die Korrektur des Differenzdruck-Meßwerts $\Delta P_M$ erfolgt in zwei Schritten, nämlich einer Korrektur des Nullpunkts und einer daran anschließenden Korrektur der Spanne des Differenzdruck-Meßwerts $\Delta P_M$.

Die Spanne bezeichnet den Meßbereich des Differenzdrucksensors, also die Differenz zwischen dem Meßbereichsende, z.B. dem maximal zulässigen Differenzdruck oder einem vom Benutzer definierten Meßbereichsende, und dem Nullpunkt.

Die Nullpunktkorrektur erfolgt in einer Rechenschaltung 97, an deren erstem Eingang entweder der zweite Korrekturwert $\Delta K_T$ oder wie in Fig. 1 durch die gestrichelte Linie angedeutet der erste Korrekturwert $\Delta K$ anliegt und an deren zweitem Eingang der Differenzdruck-Meßwert $\Delta P_M$ anliegt. Der erste und der zweite Korrekturwert $\Delta K$, $\Delta K_T$, werden im folgenden unter der Bezeichnung Korrekturwert $\Delta Y$ zusammengefaßt. Welcher der beiden Korrekturwerte unter der Bezeichnung $\Delta Y$ zu verstehen ist, hängt davon ab, bei welchen Temperaturen der Differenzdrucksensor eingesetzt werden soll.

Der Korrekturfaktor $\Delta Y$ ist gleich dem ersten Korrekturfaktor $\Delta K$, wenn der Differenzdrucksensor ausschließlich bei Temperaturen eingesetzt wird, die gleich der Referenztemperatur $T_R$ sind oder nur unwesentlich von dieser abweichen und er ist gleich dem zweiten Korrekturfaktor $\Delta K_T$, wenn der Differenzdrucksensor nicht ausschließlich bei den vorgenannten Temperaturen eingesetzt wird.

Die Rechenschaltung 97 erzeugt ein Ausgangssignal, das einem bezüglich einer durch den statischen Druck $P_S$ bedingten Nullpunktabweichung korrigierten Differenzdruck $\Delta P_K$ entspricht. Dieser wird gemäß der Gleichung

$$\Delta P_K = \Delta P_M - \alpha\ \Delta Y$$

bestimmt. $\alpha$ bezeichnet einen konstanten Nullpunktkorrekturfaktor, $\Delta Y$ den vorgenannten Korrekturfaktor und $\Delta P_M$ den Differenzdruck-Meßwert.

Der Nullpunktkorrekturfaktor $\alpha$ entspricht vorzugsweise dem Quotienten aus einem Nullpunktversatz Z und einem Referenz-Korrekturwert $\Delta K_R$:

$$\alpha = Z/\Delta K_R\ .$$

Der Referenz-Korrekturwert $\Delta K_R$ ist gleich dem bei einem Differenzdruck von 0 Pa, bei einem maximal zulässigen statischen Druck $P_{Smax}$ und bei der Referenztemperatur $T_R$ aufgenommenen ersten Korrekturwert $\Delta K$. Der Nullpunktversatz Z bezeichnet die Differenz zwischen dem bei der Referenztemperatur $T_R$ und bei dem maximal zulässigen statischen Druck $P_{smax}$ gemessenen Differenzdruck und dem ebenfalls bei der Referenztemperatur $T_R$, jedoch bei einem statischen Druck von 0 Pa gemessenen Differenzdruck, wobei für die Bestimmung beider Differenzdrücke ein Differenzdruck von 0 Pa an dem Differenzdrucksensor anliegt.

Der Nullpunktkorrekturfaktor $\alpha$ ist vor der eigentlichen Messung zu bestimmen und in einem Speicher abzulegen.

Die Rechenschaltung 97 weist eine Multiplizierschaltung 971 und eine Subtrahierschaltung 972 auf. Die Multiplizierschaltung bildet das Produkt aus dem Nullpunktkorrekturfaktor $\alpha$ und dem Korrekturfaktor $\Delta Y$ und stellt ein entsprechendes Signal einem Eingang der Subtrahierschaltung 972 zur Verfügung. An einem weiteren Eingang der Subtrahierschaltung 972 liegt das Ausgangssignal $\Delta P_M$ des Differenzdruck-Rechners 93 an. Das Produkt $\alpha\ \Delta Y$ wird von dem Differenzdruck-Meßwert $\Delta P_M$ abgezogen.

Am Ausgang der Rechenschaltung 97 steht somit ein Signal, das einem gemäß der Gleichung

$$\Delta P_K = \Delta P_M - \alpha\ \Delta Y$$

bestimmten korrigierten Differenzdruck $\Delta P_K$ entspricht, zur weiteren Verarbeitung zur Verfügung.

Die Korrektur der Spanne erfolgt in einer weiteren Rechenschaltung 98. Diese weist zwei Eingänge auf, an denen der korrigierte Differenzdruck $\Delta P_K$ und der Korrekturwert $\Delta Y$ anliegen.

Es ist eine Multiplizierschaltung 981 vorgesehen, die das Produkt aus dem Korrekturwert $\Delta Y$, einem Spanne-Korrekturfaktor $\beta$ und dem korrigierten Differenzdruck-Meßwert $\Delta P_K$ bildet und ein entsprechendes Ausgangssignal erzeugt. Diesem Ausgangssignal wird in einer Addierschaltung 982 der korrigierte Differenzdruck-Meßwert $\Delta P_K$ hinzuaddiert. Am Ausgang der Addierschaltung steht folglich ein Signal, das dem gemäß der Gleichung

$$\Delta P = (1+ \beta \ \Delta Y) \ \Delta P_K$$

bestimmten Differenzdruck entspricht, zur Verfügung.

Der Spanne-Korrekturfaktor $\beta$ ist eine gemäß der Gleichung

$$\beta = ( \ S/I -1) \ 1/\Delta K_R$$

bestimmte Kenngröße des Differenzdrucksensors, die vorab zu ermitteln und in einem Speicher abzulegen ist. In der Bestimmungsgleichung für den Spanne-Korrekturfaktor $\beta$ bezeichnet

- S die Sollspanne, also die Meßbereichsspanne, die der Differenzdrucksensor aufweisen soll,
- I die Istspanne, damit ist die Spanne gemeint die der Differenzdrucksensor bei der Referenztemperatur $T_R$ und bei dem maximal zulässigen statischen Druck $P_S$ tatsächlich aufweist, und
- $\Delta K_R$ den Referenz-Korrekturwert, der gleich dem bei der Referenztemperatur $T_R$, bei dem maximal zulässigen statischen Druck $P_{Smax}$ und bei einem Differenzdruck von ..0 Pa bestimmten ersten Korrekturwert $\Delta K$ ist.

Das Ausgangssignal $\Delta P$ der Auswerteeinheit ist hinsichtlich des temperatur-bedingten Fehlers korrigiert, sofern eine entsprechende Korrektur bei der Ermittlung des Differenzdruck-Meßwerts $\Delta P_M$ erfolgt. Weiterhin ist das Ausgangssignal $\Delta P$ der Auswerteeinheit hinsichtlich des Nenndruckfehlers korrigiert. Es entspricht somit dem tatsächlichen an dem Differenzdrucksensor anliegenden Differenzdruck.

Selbstverständlich muß die Recheneinheit 9 nicht als tatsächliche Schaltung in Form von elektronischen Bauteilen vorliegen. Sie kann gleichermaßen ganz oder teilweise in Form eines entsprechend programmierten Mikroprocessors vorliegen.

**Patentansprüche**

1.  Auswerteeinheit eines

    - ein Sensorelement (1) mit

        -- einer flüssigkeitsgefüllten Meßkammer (11),
        -- einer ersten Membran (3a), an der ein erster auf das Sensorelement (1) einwirkender Druck ($P_x$) anliegt, der der Summe aus einem statischen Druck ($P_s$) und einem ersten Druck ($P_1$) entspricht,
        -- einer zweiten Membran (3b), an der ein zweiter auf das Sensorelement (1) einwirkender Druck ($P_y$) anliegt, der der Summe aus dem statischen Druck ($P_s$) und einem zweiten Druck ($P_2$) entspricht, und
        -- zwei Meßkondensatoren (4, 5), deren Kapazitäten ($C_1$, $C_2$) sich gegensinnig mit der Differenz des ersten und des zweiten Drucks und gleichsinnig mit dem statischen Druck ($P_s$) ändern,

    - einen am Sensorelement (1) angeordneten Temperatursensor (6) und
    - eine mit dem Temperatursensor (6) verbundene Temperaturmeßschaltung (7), die ein der Sensortemperatur ($T_S$) entsprechendes Ausgangssignal liefert,
      aufweisenden Differenzdrucksensors

    welche umfaßt:

    - eine Meßschaltung (8) zur Bestimmung der jeweiligen Kehrwerte ($1/C_1$, $1/C_2$) der Kapazitäten der Meßkondensatoren (4,5) und
    - eine Recheneinheit 9,

-- die die Summe ($\Sigma$) der Kehrwerte ($1/C_1$, $1/C_2$) der beiden Kapazitäten bestimmt,

-- die die Differenz ($\Delta$) der Kehrwerte ($1/C_1$, $1/C_2$) der beiden Kapazitäten bestimmt und dieser einen Differenzdruck-Meßwert ($\Delta P_M$) zuordnet, und

-- die ein Ausgangssignal abgibt, das einem Differenzdruck ($\Delta P$), nämlich der Differenz ($P_1$-$P_2$) zwischen dem ersten und dem zweiten Druck entspricht,

und die **dadurch gekennzeichnet ist, daß**

- der Summe der Kehrwerte der Kapazitäten ($\Sigma$) eine interne Temperatur ($T_i$) zugeordnet wird,

   -- wobei die interne Temperatur ($T_i$) bis auf einen Temperaturversatz ($T_0$) dann gleich der Sensortemperatur ($T_S$) ist, wenn

      --- an den beiden Membranen (3a, 3b) kein statischer Druck ($P_S$) anliegt und
      --- die Differenz zwischen dem ersten und dem zweiten Druck gleich null ist,

- ein erster Korrekturwert ($\Delta K$) gemäß

$$\Delta K = T_i - T_s - T_0$$

bestimmt wird, der bei einer Referenztemperatur ($T_R$) ein Maß für den statischen Druck ($P_S$) ist,

   -- wobei ($T_0$) der bei der Referenztemperatur ($T_R$) bestimmte Temperaturversatz ($T_0$) zwischen der Sensortemperatur ($T_S$) und der internen Temperatur ($T_i$) ist, und

- aus dem Differenzdruck-Meßwert ($\Delta P_M$) unter Verwendung des ersten Korrekturwerts ($\Delta K$) ein bezüglich eines durch den statischen Druck ($P_S$) bedingten Meßfehlers korrigierter Differenzdruck ($\Delta P$) bestimmt wird.

2. Auswerteeinheit nach Anspruch 1, dadurch gekennzeichnet, daß ein zweiter Korrekturwert ($\Delta K_T$) bestimmt wird, der gleich dem Produkt aus dem ersten Korrekturwert ($\Delta K$) und einem Polynom der Sensortemperatur ($T_S$) ist,

- wobei das Polynom konstante Koeffizienten ($c_0$, $c_1$, $c_2$) aufweist,

   -- die in einem Speicher abgelegt sind,
   -- die derart bestimmt sind, daß bei einer Sensortemperatur ($T_S$) und einem bestimmten statischen Druck ($P_S$) der zweite Korrekturfaktor ($\Delta K_T$) jeweils den Wert annimmt, den der erste Korrekturfaktor ($\Delta K$) bei der Referenztemperatur ($T_R$) annehmen würde, wenn der gleiche statische Druck ($P_S$) auf den Differenzdrucksensor einwirkt.

3. Auswerteeinheit nach Anspruch 1, dadurch gekennzeichnet, daß der Differenzdruck-Meßwert ($\Delta P_M$) hinsichtlich eines temperatur-bedingten Meßfehlers korrigiert ist.

4. Auswerteeinheit nach den Ansprüchen 1 oder 2, dadurch gekennzeichnet, daß aus dem Differenzdruck-Meßwert ($\Delta P_M$) ein bezüglich einer durch den anliegenden statischen Druck ($P_S$) bedingten Verschiebung des Nullpunkts korrigierter Differenzdruck ($\Delta P_K$) gemäß

$$\Delta P_K = \Delta P_M - \alpha \, \Delta Y$$

bestimmt wird,
wobei $\Delta Y$ ein Korrekturwert ist,

- der gleich dem ersten Korrekturwert ($\Delta K$) ist, wenn der Differenzdrucksensor ausschließlich bei Temperaturen eingesetzt wird, die gleich der Referenztemperatur ($T_R$) sind oder nur unwesentlich von dieser abweichen und
- der gleich dem zweiten Korrekturwert ($\Delta K_T$) ist, wenn der Differenzdrucksensor nicht ausschließlich bei Temperaturen eingesetzt wird, die gleich der Referenztemperatur ($T_R$) sind oder nur unwesentlich von dieser abweichen, und

wobei $\alpha$ ein in einem Speicher abgelegter konstanter Nullpunktkorrekturfaktor ist.

5. Auswerteeinheit nach Anspruch 4, dadurch gekennzeichnet, daß der Nullpunktkorrekturfaktor ($\alpha$) gleich dem Quotienten aus einem Nullpunktversatz (Z) und einem Referenz-Korrekturwert ($\Delta K_R$) ist, wobei

- der Referenz-Korrekturwert ($\Delta K_R$) der bei einem maximal zulässigen statischen Druck ($P_{Smax}$), bei einem Differenzdruck von 0 Pa und bei einer Referenztemperatur ($T_R$) aufgenommene erste Korrekturwert ($\Delta K$) und
- der Nullpunktversatz (Z) die Differenz zwischen einem bei der Referenztemperatur ($T_R$) und bei maximalem statischen Druck ($P_{smax}$) gemessenen Differenzdruck und einem ebenfalls bei der Referenztemperatur ($T_R$), jedoch bei einem statischen Druck gleich null gemessenen Differenzdruck ist,

-- wobei für die Bestimmung beider Differenzdrücke ein Differenzdruck von 0 Pa an dem Differenzdrucksensor anliegt.

6. Auswerteeinheit nach Anspruch 4 oder 5, dadurch gekennzeichnet, daß aus dem korrigierten Differenzdruck-Meßwert ($\Delta P_K$) der Differenzdruck ($\Delta P$) derart bestimmt ist, daß er bezüglich einer durch den anliegenden statischen Druck ($P_s$) bedingten Veränderung der Spanne korrigiert ist gemäß

$$\Delta P = (1+ \beta \; \Delta Y) \; \Delta P_K$$

wobei $\beta$ ein konstanter in einem Speicher abgelegter Spanne-Korrekturfaktor ist.

7. Auswerteeinheit nach Anspruch 6, dadurch gekennzeichnet, daß der Spanne-Korrekturfaktor ($\beta$) eine gemäß der Gleichung

$$\beta = ( \; S/I \; -1) \; 1/\Delta K_R$$

bestimmte Kenngröße des Differenzdrucksensors ist, wobei

- S eine Sollspanne ist, also die Meßbereichsspanne, die der Differenzdrucksensor aufweisen soll, und
- I eine Istspanne ist, also die Spanne die der Differenzdrucksensor bei der Referenztemperatur ($T_R$) und bei dem maximal zulässigen statischen Druck ($P_{Smax}$) tatsächlich aufweist.

**Claims**

1. An evaluation unit of a differential-pressure sensor having

- a sensor element (1) with

-- a liquid-filled measuring chamber (11),
-- a first diaphragm (3a) to which a first pressure ($P_x$) which acts on the sensor element (1) is applied, which pressure corresponds to the sum of a static pressure ($P_S$) and a first pressure ($P_1$),
-- a second diaphragm (3b) to which a second pressure ($P_y$) which acts on the sensor element (1) is applied, which pressure corresponds to the sum of the static pressure ($P_S$) and a second pressure ($P_2$), and
-- two measuring capacitors (4, 5) whose capacitances ($C_1$, $C_2$) change in the opposite direction to the difference between the first and second pressures and in the same direction as the static pressure ($P_S$),

- a temperature sensor (6) which is arranged on the sensor element (1) and
- a temperature measuring circuit (7) which is connected to the temperature sensor (6) and which supplies an output signal which corresponds to the sensor temperature ($T_S$),

which evaluation unit comprises:

- a measuring circuit (8) for determining the respective reciprocal values ($1/C_1$, $1/C_2$) of the capacitances of the measuring capacitors (4, 5) and

- an arithmetic unit 9

-- which determines the sum ($\Sigma$) of the reciprocal values ($1/C_1$, $1/C_2$) of the two capacitances,
-- which determines the difference ($\Delta$) between the reciprocal values ($1/C_1$, $1/C_2$) of the two capacitances and assigns a differential-pressure measured value ($\Delta P_M$) to said difference, and
-- which outputs an output signal which corresponds to a differential pressure ($\Delta P$), specifically to the difference ($P_1$-$P_2$) between the first and second pressures,

and wherein

- an internal temperature ($T_i$) is assigned to the sum of the reciprocal values of the capacitances ($\Sigma$),

-- the internal temperature ($T_i$) being equal, with the exception of a temperature discrepancy ($T_0$), to the sensor temperature ($T_S$) when

--- there is no static pressure ($P_S$) applied to the two diaphragms (3a, 3b) and
--- the difference between the first and second pressures is equal to zero,

- a first correction value ($\Delta K$) is determined in accordance with

$$\Delta K = T_i - T_s - T_0,$$

which is a measure of the static pressure ($P_S$) at a reference temperature ($T_R$),

-- ($T_0$) being the temperature discrepancy ($T_0$), determined at the reference temperature ($T_R$), between the sensor temperature ($T_S$) and the internal temperature ($T_i$), and

- a differential pressure ($\Delta P$) which has been corrected with respect to a measuring error due to the static pressure ($P_S$) is determined from the differential-pressure measured value ($\Delta P_M$) using the first correction value ($\Delta K$).

2. The evaluation unit as claimed in claim 1, wherein a second correction value ($\Delta K_T$) is determined, which is equal to the product of the first correction value ($\Delta K$) and a polynomial of the sensor temperature ($T_S$),

- the polynomial having constant coefficients ($c_0$, $c_1$, $c_2$),

-- which are stored in a memory,
-- and which are determined in such a way that at a sensor temperature ($T_S$) and a specific static pressure ($P_S$) the second correction factor ($\Delta K_T$) assumes in each case the value which the first correction factor ($\Delta K$) would assume at the reference temperature ($T_R$) if the same static pressure ($P_S$) were acting on the differential-pressure sensor.

3. The evaluation unit as claimed in claim 1, wherein the differential-pressure measured value ($\Delta P_M$) is corrected with respect to a measuring error which is due to the temperature.

4. The evaluation unit as claimed in claim 1 or 2, wherein a differential pressure ($\Delta P_K$) which has been corrected with respect to a displacement, due to the applied static pressure ($P_S$), of the zero point is determined from the differential-pressure measured value ($\Delta P_M$) in accordance with

$$\Delta P_K = \Delta P_M - \alpha \, \Delta Y,$$

$\Delta Y$ being a correction value,

- which is equal to the first correction value ($\Delta K$) when the differential-pressure sensor is used exclusively at temperatures which are equal to the reference temperature ($T_R$) or only deviate from it insignificantly and
- which is equal to the second correction value ($\Delta K_T$) when the differential-pressure sensor is not used exclusively at temperatures which are equal to the reference temperature ($T_R$) or deviate from it only insignificantly, and

$\alpha$ being a constant zero-point correction factor which is stored in a memory.

**5.** The evaluation unit as claimed in claim 4, wherein the zero-point correction factor ($\alpha$) is equal to the quotient of a zero-point discrepancy (Z) and a reference correction value ($\Delta K_R$),

- the reference correction value ($\Delta K_R$) being the first correction value ($\Delta K$) recorded at a maximum permissible static pressure ($P_{Smax}$), at a differential pressure of 0 Pa and at a reference temperature ($T_R$) and
- the zero-point discrepancy (Z) being the difference between a differential pressure measured at the reference temperature ($T_R$) and at the maximum static pressure ($P_{Smax}$) and a differential pressure likewise measured at the reference temperature ($T_R$), but at a static pressure equal to zero,

-- a differential pressure of 0 Pa being applied to the differential-pressure sensor in order to determine the two differential pressures.

**6.** The evaluation unit as claimed in claim 4 or 5, wherein the differential pressure ($\Delta P$) is determined from the corrected differential-pressure measured value ($\Delta P_K$) in such a way that it is corrected with respect to a change in the span due to the applied static pressure ($P_S$), in accordance with

$$\Delta P = (1 + \beta\ \Delta Y)\ \Delta P_K,$$

$\beta$ being a constant span correction factor stored in a memory.

**7.** The evaluation unit as claimed in claim 6, wherein the span correction factor ($\beta$) is a characteristic variable of the differential-pressure sensor which is determined in accordance with the equation

$$\beta = (S/I - 1)\ 1/\Delta K_R,$$

- S being a desired span, that is to say the measuring range span which the differential-pressure sensor is to have, and
- I being an actual span, that is to say the span which the differential-pressure sensor actually has at the reference temperature ($T_R$) and at the maximum permissible static pressure ($P_{Smax}$).

**Revendications**

**1.** Module de traitement pour un capteur de pression différentielle présentant

- un élément capteur (1) avec

-- une chambre de mesure (11) remplie de liquide,

-- une première membrane (3a) sur laquelle est appliquée une première pression ($P_x$) agissant sur l'élément capteur (1) et correspondant à la somme d'une pression statique ($P_s$) et d'une première pression ($P_1$),

- une deuxième membrane (3b) sur laquelle est appliquée une deuxième pression ($P_y$) agissant sur l'élément capteur (1) et correspondant à la somme de la pression statique ($P_s$) et d'une deuxième pression ($P_2$), et

-- deux condensateurs de mesure (4, 5) dont les capacités ($C_1$, $C_2$) se modifient en sens inverse de la différence de la première et de la deuxième pressions et dans le même sens que la pression statique ($P_s$),

- un capteur de température (6) disposé sur l'élément capteur (1) et

- un circuit de mesure de température (7) relié au capteur de température (6) et fournissant un signal de sortie

EP 0 826 953 B1

correspondant à la température de capteur ($T_s$),

le module comprenant :

- un circuit de mesure (8) pour déterminer les valeurs inverses respectives ($1/C_1$, $1/C_2$) des capacités des condensateurs de mesure (4, 5) et

- une unité de calcul (9),

-- déterminant la somme ($\Sigma$) des valeurs inverses ($1/C_1$, $1/C_2$) des deux capacités,

-- déterminant la différence ($\Delta$) des valeurs inverses ($1/C_1$ $1/C_2$) des deux capacités et attribuant à cette différence une valeur de mesure de pression différentielle ($\Delta P_M$), et

-- délivrant un signal de sortie correspondant à une pression différentielle ($\Delta P$), à savoir à la différence ($P_1$-$P_2$) entre la première et la deuxième pressions,

caractérisé en ce

- qu'à la somme des valeurs inverses des capacités ($\Sigma$) est associée une température interne ($T_i$),

-- la température interne ($T_i$), à part un déport de température ($T_0$), étant alors égale à la température de capteur ($T_s$), si

--- aucune pression statique ($P_s$) ne s'exerce sur les deux membranes (3a, 3b), et

--- la différence entre la première et la deuxième pressions est égale à zéro,

- qu'une première valeur de correction ($\Delta K$) est déterminée selon $\Delta K = T_i - T_s - T_0$, qui, à une température de référence ($T_R$), est une mesure pour la pression statique ($P_s$),

-- où ($T_0$) est le déport de température ($T_0$) entre la température de capteur ($T_s$) et la température interne ($T_i$), déterminé à la température de référence ($T_R$), et

- qu'à partir de la valeur mesurée de la pression différentielle ($\Delta P_M$) est déterminée, en utilisant la première valeur corrigée ($\Delta K$), une pression différentielle ($\Delta P$) corrigée par rapport à une erreur de mesure due à la pression statique ($P_s$).

**2.** Module de traitement selon la revendication 1, caractérisé en ce qu'une deuxième valeur corrigée ($\Delta K_T$) est déterminée, qui est égale au produit de la première valeur corrigée ($\Delta K$) et d'un polynôme de la température de capteur ($T_s$),

- le polynôme présentant des coefficients constants ($C_0$, $C_1$, $C_2$),

-- qui sont placés dans une mémoire,

-- qui sont définis afin que le deuxième facteur de correction ($\Delta K_T$), à une température de capteur ($T_s$) et à une certaine pression statique ($P_s$), prend respectivement la valeur que le premier facteur de correction ($\Delta K$) prendrait à la température de référence ($T_R$), si la même pression statique ($P_s$) agissait sur le capteur de pression différentielle.

**3.** Module de traitement selon la revendication 1, caractérisé en ce que la valeur mesurée de pression différentielle ($\Delta P_M$) est corrigée par rapport à une erreur de mesure due à la température.

**4.** Module de traitement selon les revendications 1 ou 2, caractérisé en ce qu'à partir de la valeur mesurée de pression différentielle ($\Delta P_M$), une pression différentielle ($\Delta P_K$) selon $\Delta P_K = \Delta P_M - \alpha \Delta Y$ est déterminée, corrigée par rapport à un déplacement du point zéro dû à la pression statique ($P_s$) appliquée, où $\Delta Y$ est une valeur corrigée

13

- qui est égale à la première valeur corrigée ($\Delta K$) si le capteur de pression différentielle est utilisé exclusivement à des températures égales à la température de référence ($T_R$) ou très légèrement différentes de celle-ci, et

- qui est égale à la deuxième valeur corrigée ($\Delta K_T$) si le capteur de pression différentielle n'est pas utilisé exclusivement à des températures égales à la température de référence ($T_R$) ou très légèrement différentes de celle-ci, et

où $\alpha$ est un facteur de correction du point zéro constant placé dans une mémoire.

5. Module de traitement selon la revendication 4, caractérisé en ce que le facteur de correction du point zéro ($\alpha$) correspond au quotient d'un déport de point zéro ($Z$) et d'une valeur de correction de référence ($\Delta K_R$), où

- la valeur de correction de référence ($\Delta K_R$) est la première valeur de correction ($\Delta K$) enregistrée à une pression statique maximum admissible ($P_{smax}$), à une pression différentielle de 0 Pa et une température de référence ($T_R$), et

- le déport du point zéro ($Z$) est la différence entre une pression différentielle mesurée à la température de référence ($T_R$) et à une pression statique maximale ($P_{smax}$) et une pression différentielle également mesurée à la température de référence ($T_R$), mais à une pression statique égale à zéro,

-- où, pour la détermination des deux pressions différentielles, une pression différentielle de 0 Pa est appliquée sur le capteur de pression différentielle.

6. Module de traitement selon la revendication 4 ou 5, caractérisé en ce qu'à partir de la valeur mesurée de pression différentielle corrigée ($\Delta P_K$) on détermine la pression différentielle ($\Delta P$) de telle sorte qu'elle soit corrigée par rapport à la variation de la marge due à la pression statique ($P_s$) appliquée, et ce selon

$$\Delta P = (1 + \beta \; \Delta Y) \; \Delta P_K,$$

où $\beta$ est un facteur de correction de marge constant déposé dans une mémoire.

7. Module de traitement selon la revendication 6, caractérisé en ce que le facteur de correction de marge ($\beta$) est une grandeur caractéristique du capteur de pression différentielle déterminée selon l'équation

$$\beta = (S/I - 1) \; 1/\Delta K_R,$$

où

- S est une marge de consigne, donc la marge de plage de mesure que le capteur de pression différentielle doit présenter, et

- I est une marge réelle, donc la marge que le capteur de pression différentielle présente réellement à la température de référence ($T_R$) et à la pression statique maximum admissible ($P_{smax}$).